# EUROPEAN PATENT APPLICATION

(11) **EP 4 434 803 A1**
(43) Date of publication of application: **25.09.2024**
(21) Application number: 23182447.5
(22) Date of filing: 29.06.2023
(51) Int. Cl.: B60L 53/10, B60L 53/24, B60L 53/63, B60L 53/66, B60L 53/67

(54) **CHARGING METHOD AND APPARATUS, STORAGE MEDIUM, AND VEHICLE**

(30) Priority: 21.03.2023 CN 202310280641
(71) Applicant: Xiaomi EV Technology Co., Ltd., 100176 Beijing (CN)
(72) Inventor: LUO, Liqiu, Beijing, 100176 (CN)
(74) Representative: dompatent von Kreisler Selting Werner - Partnerschaft von Patent- und Rechtsanwälten mbB

(57) **Abstract**

The disclosure relates to the field of electric automobiles, in particular to a charging method, a storage medium and a vehicle. The charging method includes: obtaining (S101) a current voltage of a power battery of the vehicle and a maximum rechargeable voltage of an external charger connected to the vehicle; determining (S102) a target voltage of the charging port of the vehicle according to the current voltage, the maximum rechargeable voltage and an electrical characteristic of the Booster of the external charger; determining (S103) a target request voltage of the vehicle according to the target voltage of the charging port; and controlling (S104) the Booster according to the target request voltage, where the external charger charges the vehicle according to the target request voltage.

## Description

### TECHNICAL FIELD

The disclosure relates to the field of electric automobiles, in particular to a charging method and apparatus, a storage medium and a vehicle.

### BACKGROUND

A charging speed of an electric automobile depends on a charging current and voltage. Since a way to increase the charging current is limited by hardware or cost, how to increase the charging voltage has become a mainstream research direction. Today, the voltage platforms of vehicles are gradually increasing from 400 V to more than 500 V, i.e., vehicles with voltage platforms of 500 V-750 V, and with voltage platforms of more than 750 V can increase charging power nearly double with the same current. Charging piles on the market are basically divided into three types: 500 V, 750 V, and 1000 V, of which 500 V charging piles and 750 V charging piles occupy 27% and 54%, respectively, and thus a compatibility design of high-voltage platform vehicles for the two types of piles is also needed.

### SUMMARY

To solve problems existing in the related art, the disclosure provides a charging method and apparatus, a storage medium, and a vehicle.

According to a first aspect of the disclosure, a charging method is provided, including:
obtaining a current voltage of a power battery of a vehicle and a maximum rechargeable voltage of an external charger connected to the vehicle;
determining a target voltage of a charging port of the vehicle according to the current voltage, the maximum rechargeable voltage and an electrical characteristic of a Booster of the external charger;
determining a target request voltage of the vehicle according to the target voltage of the charging port; and
controlling the Booster according to the target request voltage, where the external charger charges the vehicle according to the target request voltage.

Optionally, the charging method further includes:
obtaining a target demand current of the vehicle and a maximum rechargeable current of the Booster;
determining a target request current of the vehicle according to the target demand current and the maximum rechargeable current; and
requesting a current from the external charger according to the target request current, where the external charger in response to the requesting charges the vehicle according to the target request current.

Optionally, the determining a target voltage of a charging port of the vehicle according to the current voltage, the maximum rechargeable voltage and an electrical characteristic of a Booster of the external charger, includes:
determining a boosting efficiency of the Booster;
determining a first target voltage difference between the target voltage and the current voltage according to the boosting efficiency;
determining a second target voltage difference between the target voltage and the maximum rechargeable voltage; and
determining the target voltage of the charging port according to the first target voltage difference and the second target voltage difference.

Optionally, the determining a target request voltage of the vehicle according to the target voltage of the charging port, includes:
determining the target request voltage according to the target voltage of the charging port and the maximum rechargeable voltage, where, the target request voltage is greater than the target voltage of the charging port, and the target request voltage is less than the maximum rechargeable voltage.

Optionally, the charging method further includes:
obtaining an electric quantity change condition of the power battery; and
adjusting the target voltage of the charging port according to the electric quantity change condition, and a preset relationship between a preset electric quantity of the power battery and the target voltage of the charging port.

Optionally, the obtaining a target demand current of the vehicle, includes:
obtaining a demand current and a demand voltage of the vehicle, the demand current of the vehicle including a demand current of the power battery and demand currents of other high voltage accessories of the vehicle;
determining the boosting efficiency of the Booster; and
determining the target demand current according to the demand current and the demand voltage of the vehicle and the boosting efficiency.

Optionally, the determining a target request current of the vehicle according to the target demand current and the maximum rechargeable current, includes:
determining the target demand current as the target request current in a condition that the target demand current is less than the maximum rechargeable current; and
determining the maximum rechargeable current as the target request current in a condition that the target demand current is greater than the maximum rechargeable current.

According to a second aspect of the disclosure, a charger is provided, including:
an obtaining module, configured to obtain a current voltage of a power battery of a vehicle and a maximum rechargeable voltage of an external charger connected to the vehicle;
a first determining module, configured to determine a target voltage of a charging port of the vehicle according to the current voltage, the maximum rechargeable voltage and an electrical characteristic of a Booster of the external charger;
a second determining module, configured to determine a target request voltage of the vehicle according to the target voltage; and
a controlling module, configured to control the Booster according to the target request voltage, where the external charger charges the vehicle according to the target request voltage.

According to a third aspect of the disclosure, a non-transitory computer readable storage medium is provided, storing computer program instructions, and the computer program instructions that when executed by a processor cause the processor to execute a method including:
obtaining a current voltage of a power battery of a vehicle and a maximum rechargeable voltage of an external charger connected to the vehicle;
determining a target voltage of a charging port of the vehicle according to the current voltage, the maximum rechargeable voltage and an electrical characteristic of a Booster of the external charger;
determining a target request voltage of the vehicle according to the target voltage of the charging port; and
controlling the Booster according to the target request voltage, where the external charger charges the vehicle according to the target request voltage.

According to a fourth aspect of examples of the disclosure, a vehicle is provided, including:
a memory, storing a computer program; and
a processor, that is communicatively coupled to the memory, where the processor is configured to:
obtain a current voltage of a power battery of the vehicle and a maximum rechargeable voltage of an external charger connected to the vehicle;
determine a target voltage of a charging port of the vehicle according to the current voltage, the maximum rechargeable voltage and an electrical characteristic of a Booster of the external charger;
determine a target request voltage of the vehicle according to the target voltage of the charging port; and
control the Booster according to the target request voltage, where the external charger charges the vehicle according to the target request voltage.

Optionally, the processor is further configured to:
obtain a target demand current of the vehicle and a maximum rechargeable current of the Booster;
determine a target request current of the vehicle according to the target demand current and the maximum rechargeable current; and
request a current from the external charger according to the target request current, where the external charger, in response to the requesting, charges the vehicle according to the target request current.

Optionally, the processor is further configured to:
determine boosting efficiency of the Booster;
determine a first target voltage difference between the target voltage and the current voltage according to the boosting efficiency;
determine a second target voltage difference between the target voltage and the maximum rechargeable voltage; and
determine the target voltage of the charging port according to the first target voltage difference and the second target voltage difference.

Optionally, the processor is further configured to:
determine the target request voltage according to the target voltage of the charging port and the maximum rechargeable voltage, where, the target request voltage is greater than the target voltage of the charging port, and the target request voltage is less than the maximum rechargeable voltage.

Optionally, the processor is further configured to:
obtain an electric quantity change condition of the power battery; and
adjust the target voltage of the charging port according to the electric quantity change condition, and a preset relationship between a preset electric quantity of the power battery and the target voltage of the charging port.

Optionally, the processor is further configured to:
obtain a demand current and a demand voltage of the vehicle, the demand current of the vehicle including a demand current of the power battery and demand currents of other high voltage accessories of the vehicle;
determine boosting efficiency of the Booster; and
determine the target demand current according to the demand current and the demand voltage of the vehicle and the boosting efficiency.

Optionally, the processor is further configured to:
determine the target demand current as the target request current in a condition that the target demand current is less than the maximum rechargeable current; and
determine the maximum rechargeable current as the target request current in a condition that the target demand current is greater than the maximum rechargeable current.

The technical solution provided by the disclosure may include following beneficial effects: when the Booster executes boost charging, the target voltage of the charging port of the vehicle is determined according to the current voltage of the power battery of the vehicle, the maximum rechargeable voltage of the external charger connected to the vehicle, and the electrical characteristic of the Booster of the external charger, the target request voltage of the vehicle is determined according to the target voltage, and then the Booster is controlled according to the target request voltage to control the external charger to charge the vehicle according to the target request voltage. In this way, the Booster merely maintains the voltage of the charging port and does not control the current, i.e., it no longer takes the output current as a control target and does not control the output current. Control logic is simple, and a problem of unstable control of the Booster, which is prone to a current impact and a large ripple is avoided. On the other hand, the vehicle does not need to pre-judge and reserve a duration of no voltage and current output of a charging pile, which solves the problem of a voltage drop at the charging port, thus avoiding a problem of reduced boosting efficiency of the Booster caused by the voltage drop at the charging port, and improving compatibility of the charging pile including the Booster.

It is to be understood that the above general descriptions and later detailed descriptions are merely examples and illustrative, and cannot limit the disclosure.

### BRIEF DESCRIPTION OF THE DRAWINGS

Drawings here are incorporated into the specification, constitute a part of the specification, show examples consistent with the disclosure, and are used to explain a principle of the disclosure together with the specification.
Fig. 1 is a diagram of an architecture of a boost charging loop illustrated according to an example.
Fig. 2 is a flow diagram of a charging method illustrated according to an example.
Fig. 3 is a schematic diagram of a charging scenario for a charging method illustrated according to an example.
Fig. 4 is a schematic diagram of a charging scenario for a charging method illustrated according to another example.
Fig. 5 is a diagram of an architecture of DC charging of a low-voltage platform vehicle illustrated according to an example.
Fig. 6 is a diagram of an architecture of DC charging of a high-voltage platform vehicle illustrated according to an example.
Fig. 7 is a flow diagram of a charging method illustrated according to another example.
Fig. 8 is a block diagram of a charger illustrated according to an example.
Fig. 9 is a block diagram of an electronic device illustrated according to an example.

### DETAILED DESCRIPTION

Examples will be described in detail here, and their instances are shown in drawings. When the following description refers to the drawings, unless otherwise indicated, the same numbers in different drawings indicate the same or similar elements. Implementations described in the following examples do not represent all implementations consistent with the disclosure. Rather, they are merely instances of apparatuses and methods consistent with some aspects of the disclosure as detailed in the appended claims.

In the related art, a boost function is executed by adding a Booster to a vehicle, i.e., the vehicle and a charging pile interact with messages to request the charging pile to control an output voltage, the vehicle controls an output current of the Booster, and the Booster executes tension loading to obtain a corresponding current from the charging pile.

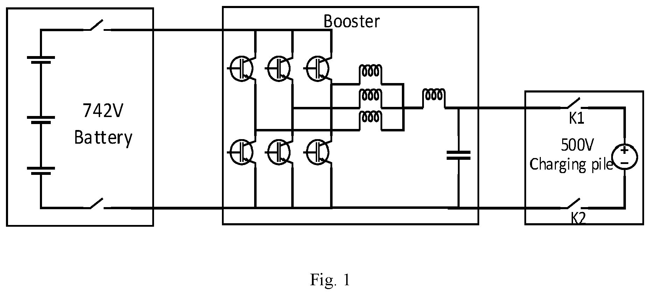

The inventor's research found that in the related art, a boost function is executed by adding a Booster to a vehicle. An architecture of a boost charging loop is shown in Fig. 1. A. The boost charging loop shown in Figure 1 at least includes a 742V battery, Booster, 500V charging pile, and relays K1 and K2. The idea of a boost charging solution of the boost charging loop shown in Figure 1 is "pile-controlled voltage, and vehicle-controlled current," i.e., the vehicle and a charging pile interact with messages to request the charging pile to control an output voltage, the vehicle controls an output current of the Booster, and the Booster executes tension loading to obtain a corresponding current from the charging pile. In addition, whether the charging pile reaches its maximum charging power is determined by judging whether a voltage of a charging port drops, and at the same time, the tension loading power of the Booster can be adjusted and is controlled to be within a maximum charging power range of the charging pile.

According to the above boost charging solution, it is possible that after the vehicle recognizes a need for a boost, the charging pile is requested to control the voltage at 480 V, and the Booster increases power from 0. When the charging power demanded by the vehicle is less than the maximum power of the charging pile, the Booster works in a current loop and outputs the current according to a request value of the vehicle, and at the same time, the charging pile outputs the voltage according to a request value of the vehicle. However, since the vehicle cannot determine the maximum charging power of the charging pile, when the charging power demanded by the vehicle increases and exceeds the maximum power of the charging pile, the voltage of the charging port will be pulled down, and if no countermeasures are executed, it will lead to a charging failure or a derating output of the charging pile, affecting charging compatibility or performance.

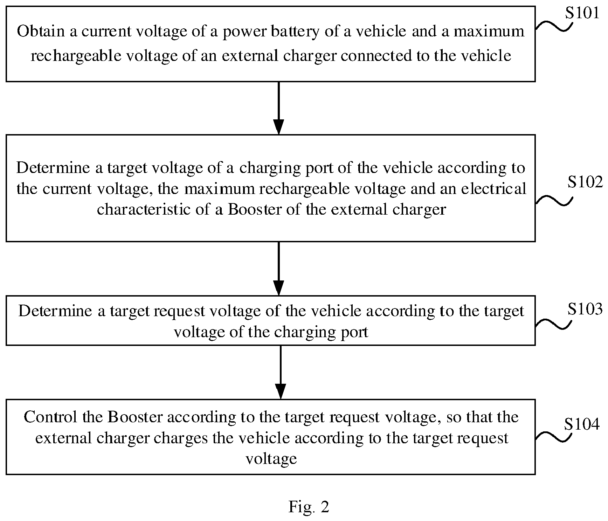

To solve this problem, in the related art, the Booster can be controlled to exit the current loop immediately when a voltage drop at the charging port is detected, an open-loop control clamps the voltage of the charging port to 455 V (a lower limit amplitude) to prevent the voltage from continuing to drop, the output current is reduced synchronously, the Booster enters into an amplitude limiting operation (power reduction) until the power of the Booster is also equal to the maximum charging power of the charging pile, and the voltage of the charging port is stabilized at 455 V Boost charging data at the 500 V charging pile is shown in Fig. 2.

However, the inventor's research found that the above response method has the following technical problems.
(1) In normal operation of the Booster, there is merely one control quantity of the output current, when the Booster enters into the amplitude limiting operation, there are two control quantities of the output current and the input voltage, so control logic is complex, and a current impact is prone to occur.
(2) After the Booster enters into the amplitude limiting operation, the voltage of the charging port drops and then affects boosting the efficiency of the Booster, i.e., a voltage difference between an input side and an output side of the Booster affects the boosting efficiency.
(3) Some charging piles are in a form of one pile with two guns. In a condition that one charging pile is connected to two vehicles A and B at the same time and charges the two vehicles A and B at the same time, there is a condition that a Booster of the vehicle A enters into an amplitude limiting operation state, then the vehicle B is disconnected from the charging pile and ends charging, and the charging pile merely charges the vehicle A. In this condition, when the charging pile continues to merely charge the vehicle A, charging power attainable by the charging pile increases, and a sudden change in the current will occur when a working state of the Booster is switched from the amplitude limiting operation to a normal working state, thus causing a relatively large ripple disturbance and temperature rise.
(4) Based on the technical problem (3), when a rise of the charging power of the charging pile is performed for the condition that the charging power attainable by the charging pile for the vehicle A is increased, the rise of the charging power of the charging pile fails because the charging power of the Booster is already solidified when the amplitude limiting operation is executed.
(5) Due to differentiation of charging piles on the market, there are some piles without voltage and current outputs for a first period of time after a start of an output when the charging piles execute module switching and starting. If the Booster starts to execute a boost during this period of time, there is a condition that the input side is under voltage, causing a charging failure. Moreover, different charging piles have different durations for no voltage and current output, and waiting time made by vehicles responding to this is difficult to be compatible.

In view of this, the disclosure provides a charging method and apparatus, a storage medium and a vehicle to solve the technical problems in the relate art.

Fig. 2 is a flow diagram of a charging method illustrated according to an example, and as shown in Fig. 2, the charging method includes the following steps.

In step S 101, a current voltage of a power battery of a vehicle and a maximum rechargeable voltage of an external charger connected to the vehicle are obtained.

In step S102, a target voltage of a charging port of the vehicle is determined according to the current voltage, the maximum rechargeable voltage and an electrical characteristic of a Booster of the external charger.

In step S103, a target request voltage of the vehicle is determined according to the target voltage of the charging port.

In step S 104, the Booster is controlled according to the target request voltage, so that the external charger charges the vehicle according to the target request voltage.

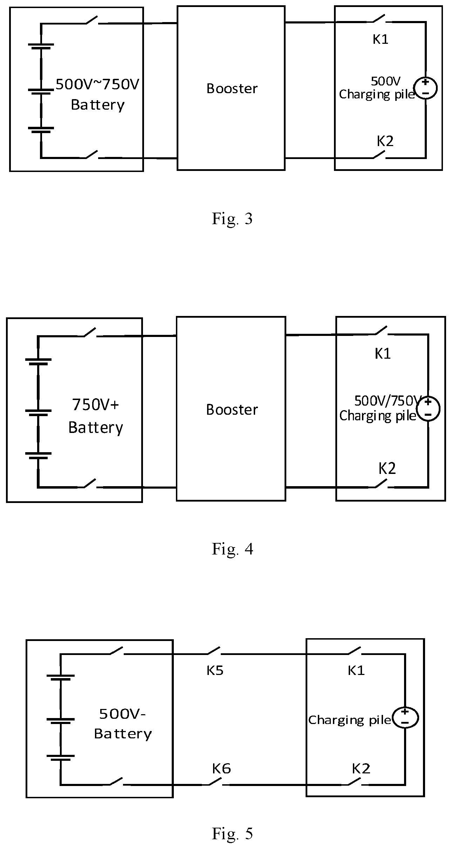

It is to be understood first that in the related art, a diagram of an architecture of DC charging of a low-voltage platform vehicle shown in Figure 5 at least includes: a battery of 500 V, a charging pile, relays K1 and K2, and direct current charging relays K5 and K6. As shown in Fig. 5, a vehicle with a voltage platform of less than 500 V merely needs to close direct current charging relays K5 and K6 when executing DC charging, and at this time, a high-voltage battery is equivalent to a very large voltage source that maintains the voltage of the charging port at the current voltage of the battery. Subsequently, the vehicle requests from the charging pile that an output voltage is the maximum charging voltage of the battery and the current is an actual demand current of the vehicle, where the charging pile cannot reach the maximum charging voltage of the battery because the voltage of the charging port is limited by the current voltage of the battery, thus switching to a constant current mode in an attempt to meet a current request. If a request current of the vehicle is within a capacity range of the charging pile, the charging pile performs outputting according to the request current of the vehicle, and if the request current of the vehicle is greater than a maximum current capacity of the pile, the charging pile performs outputting according to its maximum current capacity. With the high-voltage battery as such a large voltage source, there is basically no sudden change in the voltage of the charging port, and the charging pile may perform charging according to the maximum power.

In contrast to a low-voltage platform vehicle in an architecture, by multiplexing drive motor hardware, the Booster is arranged between the high-voltage platform vehicle and the charging pile, but the charging port is not directly connected to the high-voltage battery and needs to rely on the charging pile or the vehicle to maintain the voltage of the charging port. If the voltage of the charging port is maintained through the Booster and the current is output according to a request value, two control targets will cause the control of the Booster to be unstable, resulting in a current impact and a large ripple. If the voltage of the charging port is maintained through the charging pile, the voltage of the charging port will drop when the power of the Booster exceeds the power of the charging pile.

Thus, the disclosure provides that when the Booster executes boost charging, the Booster may be controlled to merely maintain the voltage of the charging port and not to control the current, i.e., the output current is no longer used as the control target and the current output is performed in an open loop, at the same time, energy of the high-voltage battery is extracted, and the voltage of the charging port is controlled at the target voltage by controlling a duty cycle of upper and lower bridges to avoid problems of the unstable control of the Booster, which is prone to the current impact and the large ripple, and the drop of the voltage of the charging port.

For example, the disclosure may be applied to boost charging scenarios of high-voltage platform electric automobiles, such as the boost charging scenario of the vehicle with the voltage platform of 500 V to 750 V charged at the 500 V charging pile shown in Fig. 3, and the boost charging scenario of a vehicle with a voltage platform of more than 750 V charged at a 500 V/750 V charging pile shown in Fig. 4. The boost charging scenarios shown in Figure 3 at least includes: a battery of 500 V to 750 V, Booster, 500V charging pile, and relays K1 and K2. The boost charging scenarios shown in Figure 4 includes a battery of at least 750 V, Booster, 500V/750 V charging pile, and relays K1 and K2. Certainly, the disclosure may also be applied to boost charging scenarios of electric automobiles with other high-voltage platforms or charging piles of other voltages, which is not limited by examples of the disclosure. The external charger may be the charging pile or other apparatuses that supply power to the power battery of the vehicle, and the disclosure will use the external charger as the charging pile as an example for illustration.

For example, the current voltage of the power battery can be obtained in real time, and the maximum rechargeable voltage of the external charger can be obtained from an interactive message CML of the vehicle and the charging pile. The electrical characteristic of the Booster can be stored in a preset unit in advance, or the electrical characteristic of the Booster of the current vehicle can be obtained in real time, none of which is specifically limited by the disclosure. The voltage of the charging port can be controlled to the same magnitude as the target voltage by controlling the duty cycle of the upper and lower bridges of the Booster. The method of controlling the voltage of the charging port by controlling the duty cycle of the upper and lower bridge of the Booster according to the target voltage is the relate art and will not be described in the disclosure.

Through the above technical solution, when the Booster executes boost charging, the target voltage of the charging port of the vehicle is determined according to the current voltage of the power battery of the vehicle, the maximum rechargeable voltage of the external charger connected to the vehicle, and the electrical characteristic of the Booster of the external charger, the target request voltage of the vehicle is determined according to the target voltage, and then the Booster is controlled according to the target request voltage to control the external charger to charge the vehicle according to the target request voltage. In this way, the Booster merely maintains the voltage of the charging port and does not control the current, i.e., it no longer takes the output current as the control target and does not control the output current. Control logic is simple, and a problem of unstable control of the Booster, which is prone to a current impact and a large ripple is avoided. On the other hand, the vehicle does not need to pre-judge and reserve a duration of no voltage and current output of the charging pile, which solves a problem of a voltage drop at the charging port, thus avoiding a problem of reduced boosting efficiency of the Booster caused by the voltage drop at the charging port, and improving compatibility of the charging pile including the Booster.

In a possible mode, the determining a target voltage of a charging port of the vehicle according to the current voltage, the maximum rechargeable voltage and an electrical characteristic of a Booster of the external charger, may be:
the boosting efficiency of the Booster is determined;
a first target voltage difference between the target voltage and the current voltage is determined according to the boosting efficiency;
a second target voltage difference between the target voltage and the maximum rechargeable voltage is determined; and
the target voltage of the charging port is determined according to the first target voltage difference and the second target voltage difference.

It is worth stating that the target voltage of the charging port is to maintain the first target voltage difference from the current voltage, while maintaining the second target voltage difference from the maximum rechargeable voltage.

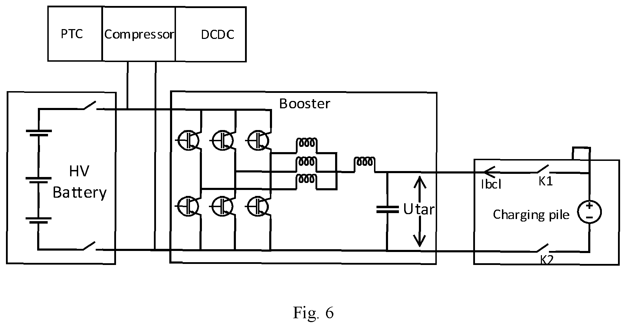

Fig. 6 is a diagram of an architecture of DC charging of a high-voltage platform vehicle illustrated according to an example. The architecture of DC charging of the high-voltage platform vehicle shown in Figure 6 at least includes: HV battery, Booster, DCDC circuit, high voltage accessories of the vehicle, relays K1 and K2, and charging pile. In which, the HV battery may be a battery with voltage greater than 500V, and the high voltage accessories of the vehicle may be a PTC, a compressor etc. The input side of the Booster includes the target voltage Utar, and the charging pile charges the vehicle according to the target request current Ibcl contained in the interactive message BCL between the vehicle and the charging pile.

For example, the boosting efficiency in the example of the disclosure refers to an optimal boosting efficiency n of the Booster, as the boosting efficiency n is affected by a voltage difference between an input side and an output side, i.e., by the voltage difference between the target voltage of the charging port and the current voltage Ucat. Thus, the first target voltage difference between the target voltage and the current voltage can be determined according to the performance parameters of the Booster itself when the boosting efficiency n of the Booster is reached. In general, the target voltage Utar may be a times the current voltage, i.e., Utar=a*Ucat, or a difference value between the target voltage and the current voltage is xV, i.e., Utar=Ucat-xV, where values of a and x are determined according to the boosting efficiency n.

For example, due to limitation of an output external characteristic of the charging pile, when the charging pile reaches its maximum rechargeable voltage, the charging pile cannot reach optimal output power of the charging pile according to the maximum rechargeable voltage, and thus an output current of the charging pile is small. Thus, the target voltage Utar of the charging port of the vehicle can be demanded to be less than the maximum rechargeable voltage Umax of the charging pile in order to control the charging pile to reach its optimal output power and thus ensure the power of boost charging. At the same time, in order to avoid that the charging power of the charging pile reaching or exceeding an upper limit of the charging power of the charging pile due to the excessive voltage of the charging pile, which affects a normal process, the target voltage Utar of the charging port can be controlled to maintain a certain voltage difference with the maximum rechargeable voltage Umax of the charging pile, i.e., the target voltage and the current voltage may maintain the second target voltage difference, and the second target voltage difference may generally be 10 V-20 V

In a possible mode, the determining a target request voltage of the vehicle according to the target voltage of the charging port, includes:

the target request voltage is determined according to the target voltage of the charging port and the maximum rechargeable voltage, where, the target request voltage is greater the target voltage of the charging port, and the target request voltage is less than the maximum rechargeable voltage.

It is to be understood that since the charging pile is in a constant current mode when the vehicle controls the voltage of the charging port, and since charging performances of the charging pile are different, if the target request voltage Ubcl of the vehicle is consistent with the target voltage Utar of the charging port, there is a problem that the charging pile judges that currently the target charging voltage has been reached, i.e., it is in an SOC full state, thus reducing the output current or stopping the current output. Meanwhile, if the target request voltage Ubcl is less than the target voltage Utar of the charging port, the charging pile will judge that the current voltage is greater than the request voltage and end charging. When the target request voltage Ubcl is greater than the maximum rechargeable voltage Umax of the charging pile, some charging piles will determine that the request voltage is greater than the upper limit of the pile voltage output and end charging, so that the target request voltage can be controlled to be greater than the target voltage of the charging port, and the target request voltage is less than the maximum rechargeable voltage.

In a possible mode, the method may further be:
an electric quantity change condition of the power battery is obtained; and
the target voltage of the charging port is adjusted according to the electric quantity change condition, and a preset relationship between a preset electric quantity of the power battery and the target voltage of the charging port.

It is to be understood that during a charging process, the voltage of the power battery will rise as the electric quantity rises, and in order to ensure optimal work efficiency, the target voltage of the charging port can be adjusted synchronously when the electric quantity rises. Where, the preset relationship between the electric quantity of the power battery and the target voltage of the charging port can be stored in a preset storage unit in advance, which is not specifically limited by the example of the disclosure. In addition, the example of the disclosure does not specifically limit an adjustment mode of the target voltage of the charging port.

It is worth stating that after an adjustment, the target voltage of the charging port is also to maintain the first target voltage difference from the current voltage, while maintaining the second target voltage difference from the maximum rechargeable voltage.

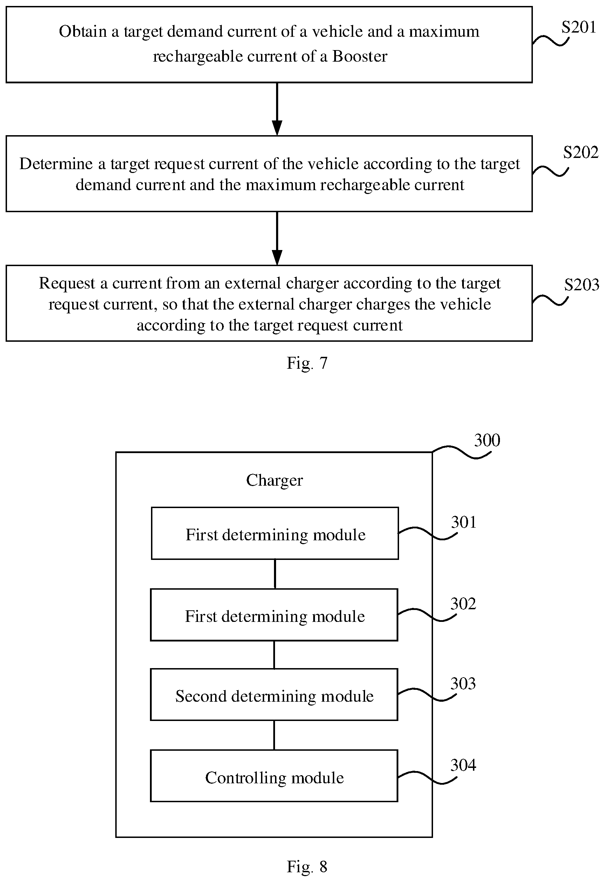

It is to be understood that the single control target makes the Booster work more stably, avoiding the problem of generating a large ripple and the current impact while stably controlling the voltage of the charging port, but the magnitude of the input/output current is entirely determined by the charging pile, so the control of the output current of the charging pile is also particularly important. In a possible mode, as shown in Fig. 7, the charging method may further include the following steps.

In step S201, the target demand current of the vehicle and the maximum rechargeable current of the Booster is obtained.

In step S202, the target request current of the vehicle is determined according to the target demand current and the maximum rechargeable current.

In step S203, the current is requested from the external charger according to the target request current, so that external charger charges the vehicle according to the target request current.

It is to be understood that the charging pile performs outputting according to the target request current Ibcl and the target request voltage Ubcl contained in an interactive message BCL between the vehicle and the charging pile.

In a possible mode, the obtaining the target demand current of the vehicle, may be:
the demand current and the demand voltage of the vehicle are obtained, the demand current of the vehicle including the demand current of the power battery and demand currents of other high voltage accessories of the vehicle;
the boosting efficiency of the Booster is determined; and
the target demand current is determined according to the demand current and the demand voltage of the vehicle and the boosting efficiency.

It is to be understood that the demand current Iveh of the vehicle includes the demand current That of the power battery, i.e., the current rechargeable current of the power battery, and real-time demand currents Iacc of other high voltage accessories such as a PTC, a compressor, and a DCDC. Where, the demand current Ibat of the power battery is affected by a current cell temperature and a cell SOC of the power battery, and since the current requested in the BCL message is outputted by the charging pile/inputted by the Booster, and the demand current Ibat of the power battery and the real-time demand currents Iacc of the high voltage accessories are the currents outputted by the Booster, the demand current That of the power battery can be transformed to determine the target demand current by introducing the Booster boosting efficiency n. Specifically, the target demand current Iveh can be calculated by the following formula: Iveh=(Ibat+Iacc)Ucat/(Utar^{∗}n).

For example, since a maximum input current Iboo of the Booster is affected by a hardware capacity of the Booster, the target request current can be controlled according to an actual hardware capacity of the Booster, i.e., the target request current is controlled to be less than or equal to the maximum input current Iboo of the Booster, in order to avoid a failure of the boost charging due to the target request current of the vehicle being greater than the maximum input current Iboo of the Booster. Meanwhile, an adjustment can also be performed according to an actual working state of the Booster during operation. For example, during operation, the Booster fails and needs to be derated, or a certain piece of hardware overheats, and at this time, the input current of the Booster is reduced. Thus, a specific value of the maximum input current Iboo of the Booster is not limited by the example of the disclosure, and can be determined in real time in conjunction with a derating condition of the Booster during actual operation.

In a possible mode, the determining the target request current of the vehicle according to the target demand current and the maximum rechargeable current, may be:
the target demand current is determined as the target request current in a condition that the target demand current is less than maximum rechargeable current; and
the maximum rechargeable current is determined as the target request current in a condition that the target demand current is greater the maximum rechargeable current.

It is to be understood that if the target request current is greater than the maximum rechargeable current of the charging pile, the charging pile performs outputting according to its own maximum output capacity, i.e., the power battery of the vehicle is charged according to the maximum rechargeable current. If the target request current is less than the maximum rechargeable current of the charging pile, the charging pile performs outputting according to the target request current, i.e., the power battery of the vehicle is charged according to the target request current.

For example, because the target request current of the vehicle is greater than the maximum input current Iboo of the Booster, causing boost charging to fail, the target request current takes the smaller of the target demand current of the vehicle and the maximum input current of the Booster, i.e., Ibcl=min {Iveh, Iboo}. After receiving the BCL message, the charging pile will take and output the smaller of the target request current and the maximum rechargeable current of the charging pile, i.e., the output current of the charging pile=min{Ibcl, the maximum rechargeable current of the charging pile}. In this way, an optimal solution can be obtained according to the target demand current of the vehicle, the maximum output current of a pile end, and the current maximum input current of the Booster, and the maximum power of the charging pile can be fully utilized without overpowering.

Fig. 8 is a block diagram of a charger illustrated according to an example. Referring to Fig. 8, the charger 300 includes an obtaining module 301, a first determining module 302, a second determining module 303 and a controlling module 304.

The obtaining module 301 is configured to obtains a current voltage of a power battery of a vehicle and a maximum rechargeable voltage of an external charger connected to the vehicle;
the first determining module 302 is configured to determine a target voltage of a charging port of the vehicle according to the current voltage, the maximum rechargeable voltage and an electrical characteristic of a Booster of the external charger;
the second determining module 303 is configured to determine a target request voltage of the vehicle according to the target voltage;
the controlling module 304 is configured to control the Booster according to the target request voltage, where the external charger charges the vehicle according to the target request voltage.

Optionally, the charger 300 further includes:
an obtaining sub-module, configured to obtain a target demand current of the vehicle and a maximum rechargeable current of the Booster;
a third determining module, configured to determine a target request current of the vehicle according to the target demand current and the maximum rechargeable current; and
a requesting module, configured to request a current from the external charger according to the target request current, where the external charger in response to the requesting charges the vehicle according to the target request current.

Optionally, the first determining module 302 is configured to:
determine boosting efficiency of the Booster;
determine a first target voltage difference between the target voltage and the current voltage according to the boosting efficiency;
determine a second target voltage difference between the target voltage and the maximum rechargeable voltage; and
determine the target voltage of the charging port according to the first target voltage difference and the second target voltage difference.

Optionally, the second determining module 303 is configured to:
determine the target request voltage according to the target voltage of the charging port and the maximum rechargeable voltage, where, the target request voltage is greater than the target voltage of the charging port, and the target request voltage is less than the maximum rechargeable voltage.

Optionally, the charging device 300 further includes:
obtaining an electric quantity change condition of the power battery; and
adjusting the target voltage of the charging port according to the electric quantity change condition, and a preset relationship between a preset electric quantity of the power battery and the target voltage of the charging port.

Optionally, the obtaining sub-module is configured to:
obtain a demand current and a demand voltage of the vehicle, the demand current of the vehicle including a demand current of the power battery and demand currents of other high voltage accessories of the vehicle;
determine the boosting efficiency of the Booster; and
determine the target demand current according to the demand current and the demand voltage of the vehicle and the boosting efficiency.

Optionally, the third determining module is configured to:
determine the target demand current as the target request current in a condition that the target demand current is less than the maximum rechargeable current; and
determine the maximum rechargeable current as the target request current in a condition that the target demand current is greater than the maximum rechargeable current.

As for the apparatus in the above example, a specific mode in which each module performs operations has been described in detail in the examples of the method, which will not be described in detail here.

The disclosure further provides a computer readable storage medium, storing computer program instructions, and the program instructions, when executed by a processor, implement steps of the charging method provided by the disclosure.

The disclosure further provides a vehicle, including:
a memory, storing a computer program; and
a processor, configured to execute the computer program in the memory to implement steps of the charging method provided by the disclosure.

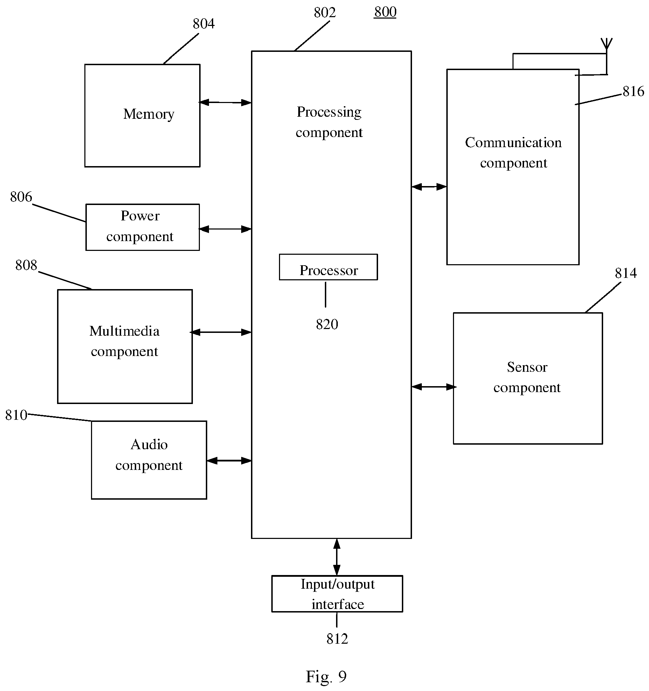

Fig. 9 is a block diagram of an electronic device illustrated according to an example. For example, the electronic device 800 may be a mobile phone, a computer, a digital broadcasting terminal, a messaging device, a game console, a tablet device, a medical device, a fitness device, a personal digital assistant, etc.

Referring to Fig. 9, the electronic device 800 may include one or more of the following components: a processing component 802, a memory 804, a power component 806, a multimedia component 808, an audio component 810, an input/output interface 812, a sensor component 814, and a communication component 816.

The processing component 802 typically controls the overall operation of the electronic device 800, such as operations associated with display, a telephone call, data communication, a camera operation, and a recording operation. The processing component 802 may include one or more processors 820 to execute instructions to complete all or part of steps of the above charging method. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the electronic device 800. Examples of these data include instructions for any application or method operating on the electronic device 800, contact data, phonebook data, messages, pictures, videos, etc. The memory 804 may be implemented by any type of volatile or nonvolatile storage device or their combination, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optic disk.

The power component 806 provides power for various components of the electronic device 800. The power component 806 may include a power management system, one or more power sources and other components associated with generating, managing and distributing power for the electronic device 800.

The multimedia component 808 includes a screen providing an output interface between the electronic device 800 and a user. In some examples, the screen may include a liquid crystal display (LCD) and a touch panel (TP). If the screen includes the touch panel, the screen may be implemented as a touch screen to receive an input signal from the user. The touch panel includes one or more touch sensors to sense touch, sliding and gestures on the touch panel. The touch sensor can not merely sense the boundary of the touch or sliding operation, but also detect the duration and pressure related to the touch or sliding operation. In some examples, the multimedia component 808 includes a front camera and/or a rear camera. When the electronic device 800 is in an operation mode, such as a shooting mode or a video mode, the front camera and/or the rear camera can receive external multimedia data. Each front camera and rear camera may be a fixed optical lens system or have a focal length and optical zoom capability.

The audio component 810 is configured to output and/or input audio signals. For example, the audio component 810 includes a microphone (MIC) configured to receive an external audio signal when the electronic device 800 is in the operation mode, such as a call mode, a recording mode, and a speech recognition mode. The received audio signal may be further stored in the memory 804 or transmitted via the communication component 816. In some examples, the audio component 810 also includes a speaker for outputting an audio signal.

The input/output interface 812 provides an interface between the processing component 802 and a peripheral interface module which may be a keyboard, a click wheel, buttons, etc. These buttons may include but are not limited to: a home button, volume buttons, a start button and a lock button.

The sensor component 814 includes one or more sensors for providing state evaluation of various aspects of the electronic device 800. For example, the sensor component 814 may detect an on/off state of the electronic device 800, and relative positioning of components, such as the components being a display and a keypad of the electronic device 800, the sensor component 814 may further detect a change in the position of the electronic device 800 or a component of the electronic device 800, the presence or absence of contact of the user with the electronic device 800, the orientation or acceleration/deceleration of the electronic device 800 and temperature changes of the electronic device 800. The sensor component 814 may include a proximity sensor configured to detect the presence of nearby objects without any physical contact. The sensor component 814 may further include an optical sensor, such as a CMOS or CCD image sensor, for use in imaging applications. In some examples, the sensor component 814 may further include an acceleration sensor, a gyroscope sensor, a magnetic sensor, a pressure sensor, or a temperature sensor.

The communication component 816 is configured to facilitate wired or wireless communication between the electronic device 800 and other devices. The electronic device 800 may access a wireless network based on a communication standard, such as Wi-Fi, 2G or 3G, 4G/LTE, 5G/NR or their combination. In an example, the communication component 816 receives a broadcast signal or broadcast-related information from an external broadcast management system via a broadcast channel. In an example, the communication component 816 further includes a near field communication (NFC) module to facilitate short-range communication. For example, the NFC module may be implemented based on a radio frequency identification (RFID) technology, an infrared data association (IrDA) technology, an ultra wideband (UWB) technology, a Bluetooth (BT) technology and other technologies.

In an example, the electronic device 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic elements for executing the above charging method.

In an example, a non-temporary computer-readable storage medium including instructions, such as the memory 804 including instructions, which can be executed by the processor 820 of the electronic device 800 to complete the above charging method, is further provided. For example, the non-temporary computer-readable storage medium may be an ROM, a random access memory (RAM), a CD-ROM, a magnetic tape, a floppy disk, an optical data storage device, etc.

In addition to being a stand-alone electronic device, the above apparatus may also be part of a stand-alone electronic device. For example, in one example, the apparatus may be an integrated circuit (IC) or a chip, where the integrated circuit may be a single IC or a collection of a plurality of ICs; and the chip may include but is not limited to the following categories: a graphics processing unit (GPU), a central processing unit (CPU), a field programmable gate array (FPGA), a digital signal processor (DSP), an application specific integrated circuit (ASIC), a system on chip (SoC), etc. The above integrated circuit or chip can be used for executing executable instructions (or codes) to implement the above charging method. The executable instructions may be stored in the integrated circuit or chip, or may be obtained from other apparatuses or devices, for example, the integrated circuit or chip includes a processor, a memory, and an interface for communication with other apparatuses. The executable instructions may be stored in the memory to implement the above charging method when the executable instructions are executed by the processor; or, the integrated circuit or chip may receive the executable instructions through the interface and transmit them to the processor for execution to implement the above charging method.

In another example, a computer program product is further provided. The computer program product contains a computer program executable by a programmable apparatus. The computer program has a code part which is configured to, when executed by the programmable apparatus, execute the above charging method.

## Claims

1. A charging method, comprising:
obtaining (S101) a current voltage of a power battery of a vehicle and a maximum rechargeable voltage of an external charger connected to the vehicle;
determining (S102) a target voltage of a charging port of the vehicle according to the current voltage, the maximum rechargeable voltage and an electrical characteristic of a Booster of the external charger;
determining (S103) a target request voltage of the vehicle according to the target voltage of the charging port; and
controlling (S104) the Booster according to the target request voltage, wherein the external charger charges the vehicle according to the target request voltage.

2. The method according to claim 1, further comprising:
obtaining (S201) a target demand current of the vehicle and a maximum rechargeable current of the Booster;
determining (S202) a target request current of the vehicle according to the target demand current and the maximum rechargeable current; and
requesting (S203) a current from the external charger according to the target request current, wherein the external charger in response to the requesting charges the vehicle according to the target request current.

3. The method according to claim 1 or 2, wherein, determining (S102) the target voltage of a charging port of the vehicle according to the current voltage, the maximum rechargeable voltage and an electrical characteristic of the Booster of the external charger, comprises:
determining a boosting efficiency of the Booster;
determining a first target voltage difference between the target voltage and the current voltage according to the boosting efficiency;
determining a second target voltage difference between the target voltage and the maximum rechargeable voltage; and
determining the target voltage of the charging port according to the first target voltage difference and the second target voltage difference.

4. The method according to any one of claims 1 to 3, wherein, determining (S103) the target request voltage of the vehicle according to the target voltage of the charging port, comprises:
determining the target request voltage according to the target voltage of the charging port and the maximum rechargeable voltage, wherein, the target request voltage is greater than the target voltage of the charging port, and the target request voltage is less than the maximum rechargeable voltage.

5. The method according to any one of claims 1 to 4, further comprising:
obtaining an electric quantity change condition of the power battery; and
adjusting the target voltage of the charging port according to the electric quantity change condition, and a preset relationship between a preset electric quantity of the power battery and the target voltage of the charging port.

6. The method according to any one of claims 2 to 5, wherein, obtaining (S201) the target demand current of the vehicle, comprises:
obtaining a demand current and a demand voltage of the vehicle, the demand current of the vehicle comprising a demand current of the power battery and demand currents of other high voltage accessories of the vehicle;
determining boosting efficiency of the Booster; and
determining the target demand current according to the demand current and the demand voltage of the vehicle and the boosting efficiency.

7. The method according to any one of claims 2 to 6, wherein, determining (S202) the target request current of the vehicle according to the target demand current and the maximum rechargeable current, comprises:
determining the target demand current as the target request current in a condition that the target demand current is less than the maximum rechargeable current; and
determining the maximum rechargeable current as the target request current in a condition that the target demand current is greater than the maximum rechargeable current.

8. A non-transitory computer readable storage medium, storing computer program instructions thereon, wherein, the computer program instructions that when executed by a processor (820) cause the processor (820) to execute a method comprising:
obtaining a current voltage of a power battery of a vehicle and a maximum rechargeable voltage of an external charger connected to the vehicle;
determining a target voltage of a charging port of the vehicle according to the current voltage, the maximum rechargeable voltage and an electrical characteristic of a Booster of the external charger;
determining a target request voltage of the vehicle according to the target voltage of the charging port; and
controlling the Booster according to the target request voltage, wherein the external charger charges the vehicle according to the target request voltage.

9. A vehicle, comprising:
a memory (804), storing a computer program thereon; and
a processor (820), that is communicatively coupled to the memory (804), wherein the processor (820) is configured to:
obtain a current voltage of a power battery of the vehicle and a maximum rechargeable voltage of an external charger connected to the vehicle;
determine a target voltage of a charging port of the vehicle according to the current voltage, the maximum rechargeable voltage and an electrical characteristic of a Booster of the external charger;
determine a target request voltage of the vehicle according to the target voltage of the charging port; and
control the Booster according to the target request voltage, wherein the external charger charges the vehicle according to the target request voltage.

10. The vehicle according to claim 9, wherein the processor (820) is further configured to:
obtain a target demand current of the vehicle and a maximum rechargeable current of the Booster;
determine a target request current of the vehicle according to the target demand current and the maximum rechargeable current; and
request a current from the external charger according to the target request current, wherein the external charger, in response to the requesting, charges the vehicle according to the target request current.

11. The vehicle according to claim 9 or 10, wherein the processor (820) is further configured to:
determine a boosting efficiency of the Booster;
determine a first target voltage difference between the target voltage and the current voltage according to the boosting efficiency;
determine a second target voltage difference between the target voltage and the maximum rechargeable voltage; and
determine the target voltage of the charging port according to the first target voltage difference and the second target voltage difference.

12. The vehicle according to any one of claims 9 to 11, wherein the processor (820) is further configured to:
determine the target request voltage according to the target voltage of the charging port and the maximum rechargeable voltage, wherein, the target request voltage is greater than the target voltage of the charging port, and the target request voltage is less than the maximum rechargeable voltage.

13. The vehicle according to any one of claims 9 to 12, wherein the processor (820) is further configured to:
obtain an electric quantity change condition of the power battery; and
adjust the target voltage of the charging port according to the electric quantity change condition, and a preset relationship between a preset electric quantity of the power battery and the target voltage of the charging port.

14. The vehicle according to any one of claims 10 to 13, wherein the processor (820) is further configured to:
obtain a demand current and a demand voltage of the vehicle, the demand current of the vehicle comprising a demand current of the power battery and demand currents of other high voltage accessories of the vehicle;
determine boosting efficiency of the Booster; and
determine the target demand current according to the demand current and the demand voltage of the vehicle and the boosting efficiency.

15. The vehicle according to any one of claims 10 to 14, wherein the processor (820) is further configured to:
determine the target demand current as the target request current in a condition that the target demand current is less than the maximum rechargeable current; and
determine the maximum rechargeable current as the target request current in a condition that the target demand current is greater than the maximum rechargeable current.
